# EUROPEAN PATENT SPECIFICATION

(11) **EP 1 206 910 B1**
(45) Date of publication and mention of the grant of the patent: **15.09.2004**
(21) Application number: 00500241.5
(22) Date of filing: 20.11.2000
(51) Int. Cl.: A23G 3/28, B67D 5/42, B67D 5/38, A47J 43/28, A21C 15/00, B65B 1/04, B65B 3/00, B65D 83/14, A23G 3/20, A23G 3/02

(54) **Dispenser for confectionery products in semi-solid state**
Spender zurAusgabe von Süssigkeiten in teilflüssigem Zustand
Distributeur de produits de confiserie à l' état semi solide

(43) Date of publication of application: 22.05.2002
(73) Proprietor: Marcos Larranaga y Cia, S.A., 20570 Bergara (Guipuzcoa) (ES)
(72) Inventor: Larranaga Cortabarria, Miguel, Angel, 20570-Bergara(Guipuzcoa) (ES)
(74) Representative: Toro Gordillo, Ignacio Maria

(56) References cited:
- EP-A- 0 369 723
- GB-A- 285 188
- GB-A- 298 340
- GB-A- 379 931
- US-A- 3 231 149
- US-A- 4 966 537
- US-A- 5 538 050
- US-A- 5 622 285

## Description

The present invention refers to a dispensing apparatus which has been specially conceived for confectionery products in semi-solid state, such as, for example, cream, fondant, etc., which are conventionally applied with the classic "pastry bag", as known from the documents US 5 538 050 and US 5 622 285.

The proposed dispenser ensures that the product is perfectly dispensed, and it also allows the user to carry out the operation with only one hand, thus increasing productivity, making handling easier and also facilitating its subsequent cleaning.

### BACKGROUND OF THE INVENTION

Independently of the classic pastry bag, already mentioned hereinbefore, which consists of a kind of deformable cone, which contains the product, having at its apex an orifice out of which the product emerges by manual pressure upon the bag itself, more complex dispensers are known in which a rigid cone is used as a deposit, the said cone having an outlet orifice provided with a manually-openable valve, such that while one hand supports the said cone with the help of a handle, the other one operates the valve to open and close the same.

More specifically, the said valve is extended in a rod, which extends to a transverse bridge at the mouth of the cone, the rod being retractable against the tension of a spring by the operation of a lever. The transverse arm extends sideways to form the handle in such a way that, as mentioned above, one hand holds the cone by the handle and the other activates the operating lever of the valve.

In an attempt to avoid this problem of simultaneous use of both the user's hands, a known method is to complement this type of dispenser with a double-bodied cone-shaped support, based on rods, which can stand on the work table surrounding the piece of baking which is to receive the product, in such a way that the use of only one hand is required to operate the valve lever.

Far from simplifying the operational process, this solution complicates it even more, as the support has to be changed from one piece to another and with the container cone connected to it, which involves a notable loss of time, to which must also be added the unit's lack of stability and the limitation inherent in the said support which can only be used on pieces of confectionery smaller than the hoop which makes up its supporting base.

Finally, all the mechanisms of this type of dispenser come into contact with the product, so that cleaning them is also complicated.

### DESCRIPTION OF THE INVENTION

The dispenser proposed by the invention resolves the problem described above, in the different aspects mentioned, in a completely satisfactory way.

To this end, and more specifically, the said dispenser is constructed by means of the functional combination of a supporting unit and a cone or vessel, with the special feature that the said supporting unit incorporates a housing for the cone, in which the cone can easily be connected and locked in place to prevent it from falling accidently should the supporting unit undergo excessive inclination. To this housing a handle is joined for handling the unit. It is a hollow handle, with a section that is appreciably parallel to the imaginary axis of the cone in which, in turn, is housed an axis which at its upper end emerges from the handle, ending in an operating button, which can be operated with the same hand that is holding the handle, and which at its lower end is associated with an arm which can move downwards against the tension of a spring. The free end of the said arm ends, at the level of the apex of the cone or vessel, in the corresponding outlet nozzle for the product, which is assisted by a valve.

More specifically, the said nozzle is mounted in a detachable way on the arm, in such a way that it can be replaced at any time, and the valve is likewise mounted on the free end of the arm, physically independent of the nozzle, in such a way that the said nozzle can be replaced when the valve is closed and the cone loaded with the product.

The valve is in the form of a bowl provided with an axial upper appendage, which in normal conditions keeps the cone's outlet closed, and which in its base and around the said appendage incorporates a number of outlet orifices to the nozzle, in such a way that when the dispenser is at rest, the said spring keeps the valve pressed against the cone's outlet and consequently in a closed situation, while when the button is operated both the nozzle and the valve move downwards, separating from the cone and allowing the product to exit.

As may be inferred from the foregoing description, under normal handling conditions of the dispenser, only the cone or vessel, the valve and the nozzle come into contact with the product, so that cleaning operations only affect these elements, which are easily detachable from the rest of the dispenser's structure.

### DESCRIPTION OF THE DRAWINGS

To complement the description that is being given and in order to promote a fuller understanding of the invention's features, in accordance with a preferred practical embodiment of the same, the said description is accompanied by a set of drawings, which are an integral part of the description, and in which by way of illustration and non-restrictively, the following is represented:
Figure 1.- Shows, in perspective view, the supporting unit which forms part of the dispenser of confectionery products in semi-solid state which constitutes the object of the present invention.
Figure 2.- Shows a side elevation view in cross-section of the unit of the foregoing figure, with which the cone or vessel containing the product appears duly juxtaposed.
Figure 3.- Shows a detail in perspective of the valve which forms part of the dispenser, in inverted position.
Figure 4.- Shows, finally, a cross-section similar to that of figure 2, on a larger scale, in which the two basic components of the dispenser are duly connected.

### PREFERRED EMBODIMENT OF THE INVENTION

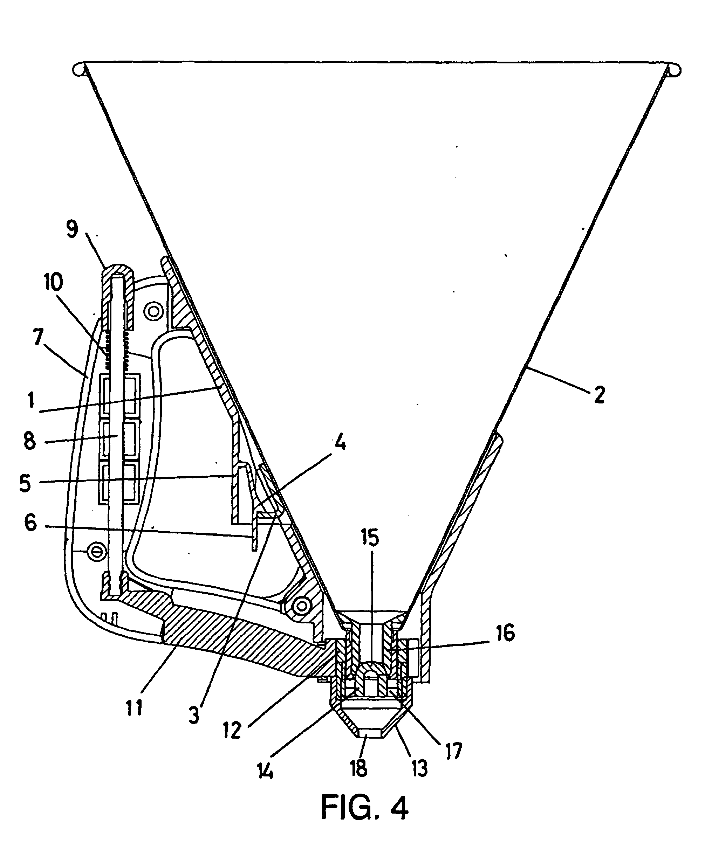

In the light of the figures described, it may be observed that the proposed dispenser is made up of a supporting unit comprising a housing (1), of an inverted and cylindrical-conical shape, for insertion within it of the cone or vessel (2) containing the product in question. This cone (2) incorporates in its side wall a locking fin (3), elbow-jointed outwards, for locking into a catch (4), conveniently placed in a lateral and lower tubular extension (5) of the housing-support itself, in such a way that by the mere introduction of the cone (2) into the housing (1) locking is automatically achieved, as shown in figure 4, it being necessary to operate on the trigger (6) of the catch (4) for uncoupling to take place.

To the housing-support (1) a lateral handle (7) is conveniently joined, which is hollow and has an axis (8) inside which is appreciably parallel to the imaginary axis of the cone (2). This axis (8) emerges to the outside at its upper end, ending in a button (9), and may be moved downwards by operating the said button (9) with the thumb of the same hand which is holding the handle (7), against the tension of a spring (10), while at the lower end of the said axis (8) an arm (11) is joined, inside the lower section of the handle (7), which goes towards the apex of the housing-support (1), where it ends in a ring (12) which simultaneously and independently receives a nozzle (13) and a closing valve (14), which are axially juxtaposed with the cone (2).

More specifically, the valve (14) is in the form of a kind of inverted bowl, and has in its base a hemispherical and cambered appendage (15) through which it comes into contact, when at rest, with an outlet part (6) which ends, in turn, the mouth or lower end of the cone (12), in such a way that by means of these elements a watertight seal is made for the said cone in the said rest situation.

In a complementary way, the base of the bowl which makes up the valve (14) incorporates, around its appendage (15), a circumferential alignment of orifices (17) for the product to exit to the inside of the nozzle (13), and subsequently to the outside through the orifice (18) of the said nozzle.

Thus, holding the entire dispenser by the handle (7) with one hand, the dispenser normally remains closed while the button (9) is not operated. When the said button is operated, the arm (12) moves downwards, pulling with it the nozzle (13) and the valve (14), and separating the appendage (15) of the latter from the outlet part (16) of the cone (2), whereupon the product falls to the base of the bowl constituted by the said valve (14), passes through the orifices (17) of the latter and finally reaches the nozzle (13).

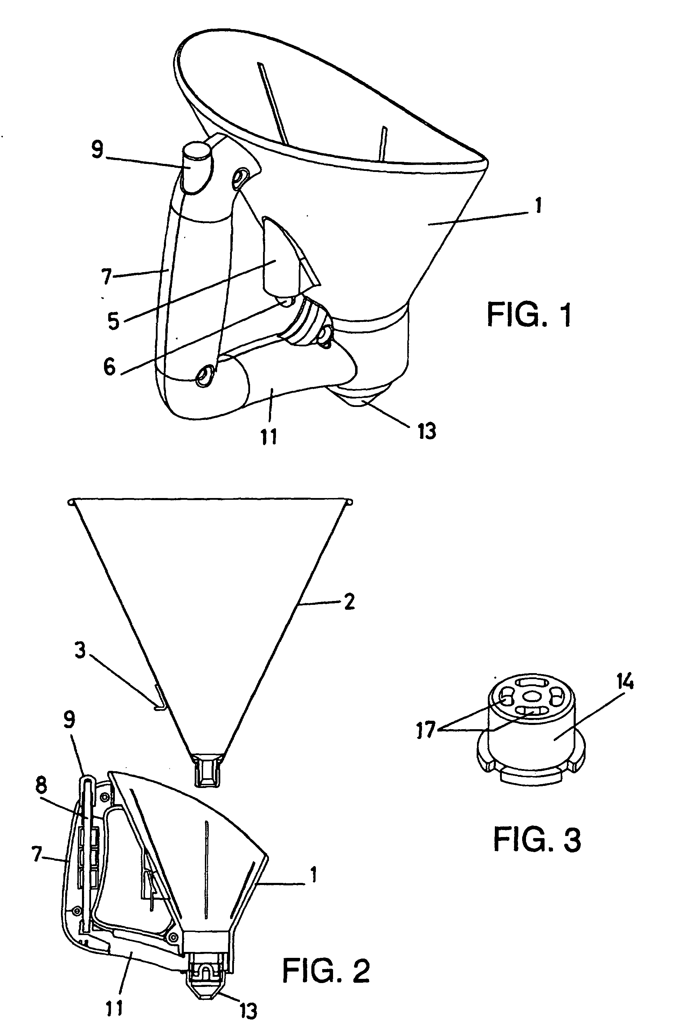

From the described structure it may be inferred, as stated above, that the dispenser can be used with only one hand, without complementary supports, having a simple structure which eliminates complex systems of assembly and disassembly, which improves cleaning and entails greater productivity. It also allows the use of several cones (2) on the same supporting unit, with different products, or different in size, in this last case maintaining the cone shape. All of which is achieved with a very attractive aesthetic appearance, as may be inferred from observation of figure 1.

## Claims

1. Dispenser for confectionery products in semi-solid state, the purpose of which is to dispense the said product, such as for example cream, fondant or the like, by means of a cone or cone-shaped containing vessel, which is open at its apex, and which is **characterised in that** it incorporates a supporting unit for the said cone, which takes the form of a support (1) strictly speaking, also cone-shaped, open at its apex, to which a lateral handle (7) is joined, said handle is hollow and houses an axis (8) inside, which is appreciably parallel to the imaginary axis of the support or conical housing (1), this axis (8) emerges to the outside of the handle (7) at its upper end, where it ends in a button, the said axis (8) being movable downwards against the tension of a spring (10), and there being joined to the lower end of the said axis an arm (11) which goes towards the open apex of the support or housing (1), where it receives, through a ring (12) and by means of threading, a nozzle (13) and a valve (14) which closes the cone or vessel (2), all of which is achieved in such a way that with the same hand that holds the handle (7), the button (9) can be operated to open the valve.

2. Dispenser for confectionery products in semi-solid state, as claimed in claim 1, **characterised in that** the cone or vessel (2) incorporates in its side wall a locking fin (3), elbow-jointed outwards, while the housing or conical support (1) incorporates, in a corresponding position, a tubular, lower projection (5) inside which there is a locking catch (6) for the cone or vessel (2) by means of the latter's fin (3), this catch (4) being provided with a manual trigger (6) for releasing the cone or vessel (2).

3. Dispenser for confectionery products in semi-solid state, as claimed in claim 1, **characterised in that** the valve (14), partially housed inside the nozzle (13), is shaped like a kind of cylindrical and inverted bowl, with a circumferential and perimetric alignment of orifices (17) in its base, which emerge to a central and radial appendage (15), ascending, preferably of a hemispherical, cambered shape, which makes the valve close on a cylindrical outlet part (16) belonging to the cone or vessel (2) and an axial extension of the apex of the same, all of this is achieved in such a way that, when the dispenser is at rest, the appendage (15) rests upon the mouth of the part (16), establishing the closed position, while operation of the button (9) causes the said appendage (15) to move downwards and the consequent opening of the valve and the exit of the product to the base of the bowl (14) and, through the orifices (17) of the latter, to the inside of the nozzle (13) where it exits definitively to the outside through the latter's orifice (18).

## Patentansprüche

1. Dosiergerät für Konditoreiprodukte in halbfester Phase, mit dem das genannte Produkt, wie zum Beispiel Sahne, Creme oder ähnliches, über einen Kegel oder ein kegelförmiges Gefäß, das das Produkt enthält und am Scheitel geöffnet ist, ausgebracht werden soll, **dadurch gekennzeichnet, dass** es eine Trägeranordnung für den genannten Kegel aufweist, der in Form eines ebenfalls kegelförmigen Trägers (1), der am Scheitel geöffnet ist, ausgeführt ist, mit dem ein hohler seitlicher Griff (7) einstückig verbunden ist, in dessen Innerem eine Achse (8) aufgenommen ist, die im wesentlichen parallel zur imaginären Achse des kegelförmigen Trägers oder der Aufnahme (1) verläuft, wobei diese Achse (8) am oberen Ende aus dem Griff (7) hervorsteht und in einem Druckknopf endet und die genannte Achse (8) gegen die Spannung einer Feder (10) nach unten verschoben werden kann, und am unteren Ende der Achse ein Arm (11) einstückig mit dieser verbunden ist, der auf den geöffneten Scheitel des Trägers bzw. der Aufnahme (1) gerichtet ist, wo er über einen Ring (12) und ein Gewinde eine Tülle (13) und ein den Kegel oder das Gefäß (2) verschließendes Ventil (14) aufnimmt, wobei all dies so ausgeführt ist, dass der Druckknopf (9) zur Öffnung des Ventils mit der gleichen Hand betätigt werden kann, die auch den Griff (7) hält.

2. Dosiergerät für Konditoreiprodukte in halbfester Phase nach Anspruch 1, **dadurch gekennzeichnet, dass** der Kegel oder das Gefäß (2) an seiner Seitenwand eine Rastklappe (3), die nach außen abgewinkelt ist, aufweist, während die kegelförmige Aufnahme bzw. der Träger (1) an der entsprechende Position eine rohrförmige und untere Verlängerung (5) aufweist, in deren Innerem eine Riegelfalle (6) für den Kegel oder das Gefäß (2), über die Klappe (3) desselben, angeordnet ist, wobei die Riegelfalle (4) mit einer Handbetätigungsvorrichtung (6) versehen ist, um den Kegel oder das Gefäß (2) freizugeben.

3. Dosiergerät für Konditoreiprodukte in halbfester Phase nach Anspruch 1, **dadurch gekennzeichnet, dass** das teilweise im Inneren der Tülle (13) aufgenommene Ventil (14) in Form einer zylinderförmigen und umgekehrten Pfanne ausgeführt ist, die an ihrem Umfang am Boden in einer Reihe liegende Öffnungen (17) aufweist, die in einen zentral und radial angeordneten, nach oben gehenden Fortsatz (15) hineinragen, welcher vorzugsweise halbkugelförmig und gewölbt ausgeführt ist, der auf einem zylinderförmigen, zum Kegel oder Gefäß (2) gehörigen Austrittsstück (16), das eine axiale Verlängerung des Scheitels desselben ist, den Verschluss des Ventils bewirkt, wobei all dies so ausgeführt ist, dass in Ruhelage des Dosiergeräts der Fortsatz (15) auf der Mündung des Stücks (16) aufliegt, und dort einen Verschluss bewirkt, während die Betätigung des Druckknopfs (9) eine Verschiebung des genannten Fortsatzes (15) nach unten und die darausfolgende Öffnung des Ventils, mit Austritt des Produkts zum Boden der Pfanne (14) und über die Öffnungen (17) letzterer zum Inneren der Tülle (13), bewirkt, so dass das Produkt endgültig über die Öffnung (18) in dieser Tülle nach außen treten kann.

## Revendications

1. Doseur de produit de pâtisserie en phase semi-solide, dont le but est de fournir ledit produit, comme par exemple de la crème fraîche, de la crème ou similaire, au dépens d'un cône ou récipient conteneur à configuration conique, ouvert à son sommet, **caractérisé en ce qu'**il incorpore un ensemble support pour ledit cône, matérialisé en un support proprement dit (1) également à configuration conique, ouvert à son sommet, auquel est solidaire une anse latérale (7) creuse, à l'intérieure de laquelle est logé un axe (8), sensiblement parallèle à l'axe imaginaire du support ou logement conique (1), l'axe (8) émergeant à l'extérieur de l'anse (7) à son extrémité supérieure, où il se termine en un poussoir, ledit axe (8) pouvant se déplacer vers le bas à l'encontre de la tension d'un ressort (10) et un bras (11) étant solidarisé à l'extrémité inférieure de celui-ci en se dirigeant vers le sommet ouvert du support ou logement (1), où à travers un anneau (12) et au moyen d'un filetage il reçoit une buse (13) et une soupape (14) qui ferme le cône ou récipient (2), tout cela de manière que la même main qui supporte l'anse (7) peut actionner le poussoir (9) pour l'ouverture valvulaire.

2. Doseur de produits de pâtisserie en phase semi-solide, selon la revendication 1, **caractérisé en ce que** le cône (2) incorpore dans sa paroi latérale une ailette d'enclenchement (3) coudée vers l'extérieur, tandis que le logement ou support conique (1) incorpore, en correspondance positionnelle, une projection tubulaire et inférieure (5) au sein de laquelle un cliquet (6) d'enclenchement avec du jeu pour le cône ou récipient (2) à travers l'ailette (3) de cette dernière, le cliquet étant pourvu d'un actionneur manuel (6) pour libérer le cône ou récipient (2).

3. Doseur de produits de pâtisserie en phase semi-solide, selon la revendication 1, **caractérisé en ce que** la soupape (14), partiellement logée au sein de la buse (13), configure une espèce de cuvette cylindrique et inversée, avec un alignement circonférentiel et périmétral d'orifices (17) dans son fond, qui émergent à un appendice central et radial (15), ascendant, de préférence à configuration semi-sphérique et surélevée, qui établit la fermeture valvulaire sur une pièce de sortie (16), cylindrique appartenant au cône ou récipient (2) et étant le prolongement axial du sommet de celui-ci, tout cela de manière qu'en situation de repos du doseur, l'appendice (15) appuie sur l'embouchure (4) de la pièce (16), en établissant la situation de fermeture, tandis que l'actionnement du poussoir (9) provoque le déplacement descendant dudit appendice (15) et la postérieure ouverture valvulaire avec la sortie du produit vers le fond de la cuvette (14), et à travers les orifices (17) de cette dernière vers l'intérieur de la buse (13) pour la sortie définitive à l'extérieur à travers l'orifice (18) de cette dernière.
